# EUROPEAN PATENT SPECIFICATION

(11) **EP 2 299 845 B1**
(45) Date of publication and mention of the grant of the patent: **14.08.2013**
(21) Application number: 09770457.1
(22) Date of filing: 23.06.2009
(51) Int. Cl.: A23L 1/08, A21D 2/34, A23C 19/09, A23L 2/60, C12G 3/02

(54) **FREE-FLOWING PARTICULATE HONEY PRODUCT COMPRISING CRYSTALLISED NATURAL HONEY AND PROCESS FOR PRODUCING THEREOF**
FREIFLIESSENDES TEILCHENFÖRMIGES HONIGPRODUKT, DAS KRISTALLISIERTEN NATÜRLICHEN HONIG ENTHÄLT, UND VERFAHREN ZU SEINER HERSTELLUNG
PRODUIT DE MIEL PARTICULAIRE FLUIDE COMPRENANT DU MIEL NATUREL CRISTALLISÉ ET PROCÉDÉ POUR PRODUIRE CELUI-CI

(30) Priority: 25.06.2008 RU 2008129215
(43) Date of publication of application: 30.03.2011
(73) Proprietor: Limited Liability Company "MEDOVYY DOM", Batetskiy rayon, d Moyka 175012 (RU)
(72) Inventor: POLTORATSKAYA, Alfia Rinatovna, St.Petersburg 197374 (RU); POLTORATSKY, Vladimir Borisovich, St. Petersburg 197374 (RU)
(74) Representative: KATZAROV S.A.
(86) International application number: PCT/RU2009/000311
(87) International publication number: WO 2009/157810

(56) References cited:
- WO-A-2005/053431
- FR-A- 2 664 472
- US-A- 4 504 516

## Description

### FIELD OF THE INVENTION

The invention relates to the field of food industry. More specifically, the invention relates to a free-flowing particulate honey product comprising crystallized natural bee honey and a process for producing thereof.

### BACKGROUND OF THE INVENTION

Honey is a natural dietary product and is widely used in food industry. The importance of honey relies on bioactive healthy substances comprised therein and its unique taste and aroma. However, honey has certain properties preventing it from being easily handled, stored and transported, and thus, hindering its wide use. Thus, high viscosity of honey leads to complications when pouring honey and recovering from transportation containers. Moreover, honey is hard to meter out and batch, which impedes industrial usage of honey as an additive to food products. Honey is also known to be highly hydroscopic, while environment moisture adsorption can result in fermentation. This gives rise to special requirements for honey storage conditions. In particular, honey shall be stored in tightly closed containers in the absence of light and equipped with humidity and temperature control systems.

Therefore it would be highly advantageous to provide a free flowing form of honey allowing for easy transportation and storage and further processing in various food products, and cosmetic compositions.

WO2005/053431, 2005.16.01 (XebecPharma Co. Ltd (KR)) discloses a method for producing honey powder, wherein honey is combined with a predetermined additive powder in the ratio from 5:95 to 95:5, then homogeneously mixed followed by moisture removal using a predetermined drying manner. In this invention, the additive is selected from various substances including glucose. According to the invention, moisture is removed by hot air drying, freeze drying or vacuum drying. Each method involves treatment of honey in conditions that deteriorate its natural properties and cause undesirable changes in honey imposed by drying conditions. Specifically, heating honey with hot air results in deactivation of vitamins, loss of antimicrobial properties and aroma, degradation of enzymes. Thermal treatment of honey induces production of a carcinogenic product of sucrose degradation, hydroxymethylfurfural (HMF). Freezing honey also results in loss of vitamins (for example, vitamin K), decomposition and degradation of plant proteins. Drying under vacuum carried out at low temperatures, causes similar changes.

The major drawback of a method disclosed in WO2005/053431 and other methods involving a step of drying is associated with subjecting honey to high or low temperatures that causes decomposition of valuable compounds comprised therein, loss of native properties and inherent honey taste and aroma. Another disadvantage is the loss of the natural moisture content as a result of thermal treatment, which indirectly causes the high water absorbency of the product obtained. As a result, the product shall be stored in a sealed container in order to avoid swelling and caking. The powder product characterized by high water absorbency tends to cake and clump. Loss of moisture can additionally contribute to enzyme decomposition. Moreover, moisture evaporation is a power- consuming and tedious process.

FR 2664772 discloses a honey powder consisting of a mixture of honey and a water soluble non-hygroscopic substrate. Said substrate can be a monosaccharide or a disaccharide, or also a sugar alcohol or mixture thereof. Further, said substrate can contain a monosaccharide such as glucose.

FR 2664772 also discloses a method of manufacturing a honey powder, comprising the step of heating honey between 16°C and 40 °C (not more than 45 °C), then introducing a determined quantity of a glucose substrate in one portion without any contact with the wall of the mixing tank, and rotating mixer slowly. The hardened honey-glucose mass is ground that results in destruction of the honey crystalline structure of the final honey powder.

US 4,504,516 discloses powdered honey products and a method for preparing thereof. The powdered honey product is obtained by mixing honey, fine particle silica and polymeric carbohydrate and at least one another bee product, and subsequent comminuting the mixture by hammer beaters. This procedure also disrupts the crystalline structure and results in mostly amorphous honey powder. The final moisture of the honey products obtained is up to 14%.

RU 2309609, 2007.11.10 discloses a method for producing a free-flowing product comprising honey, which avoids thermal treatment of starting materials and comprises mechanically mixing natural apian honey with a modified starch and additionally, water-swelling partially hydrolyzed flour. Prior to mixing, starch or partially hydrolyzed flour are dried to 0,2-0,5% moisture content. Honey and an additive are mixed in mass ratio 1:(1=2) for starch and 1:(1-1,2) for flour at the temperature 30-35°C. The known method results in a free-flowing product comprising natural bioactive components of honey intact. However, this method and product therefore have also several drawbacks.

Differences in moisture content of the starting apian honey make it hard to select an appropriate amount of an additive to provide the desired flowability of the product. Due to high water absorbency of the additives, manipulations with them are rather problematic. Moreover, modified starch and partially hydrolyzed flour are the foreign substances for honey. Introducing of such substances into honey alters its composition and lowers gustatory and dietary properties; in addition, honey aroma is inhibited in the mixture. Dissolving starch or flour gives a turbid solution. The turbidity of produced solution prevents the product from being used as an additive of certain of food industry (for example, drinks) and ruins the consumer's committal to the product. Thus, while the method of RU2309609 do eliminate the thermal treatment step, the product produced by the method comprises additives more than a half of modified substances lowering its gustatory, buying, and useful properties.

The object of the invention is to provide a free flowing particulate honey product comprising natural bee honey, which would be convenient for processing and transportation, while at the same time preserving the taste, aroma, biological activity and other healthy properties of natural honey. Additionally, it would be advantageous to have a honey product which dissolve quickly in water accompanied by the formation of a clear solution having a pleasant taste and able to be economically produced. A further object of the invention is the provision of a process which makes possible the rapid and cheap preparation of a honey product exhibiting all the above stated properties, and require no expensive and honey deteriorating drying steps.

### SUMMARY OF THE INVENTION

The inventor of the present invention has surprisingly found that the above objects can be attained by a honey product comprising the increased amount of glucose in admixture to natural crude honey. The advantage of a honey product comprising glucose as an additive is that glucose is natural honey component. Though, generally, it is considered that any additive to crude honey reduces the healthy properties of honey, the inventor of the present invention has surprisingly found that when glucose is present in the form of a mixed crystals with natural honey, opposite to a common opinion, it provides the preservation of healthy properties of natural honey and extends its shelf life.

The crystals of honey product according to the present invention are similar to those that would form in natural conditions and thus, the honey product exhibits the properties of natural honey, including the aroma, biological activity, and natural taste. In other words, a honey product obtained from buckwheat honey, tastes and gives the aroma of natural buckwheat honey, while the lime tree honey product respectively has the taste and aroma of lime tree honey. Moreover, among all honey sugars, glucose has the lowest water absorbency providing additional advantages in storage and use.

The research performed by the inventor of the present invention has shown that using glucose as an additive enables to eliminate the step of drying which causes most of deleterious changes in structure and composition of honey and provides a healthy natural honey product unlike honey products prepared by known methods involving heating at a temperatures above 50C, which result in a loss of specific taste and aroma of natural honey, which is also stripped off its healthy biological properties.

Further, it has been found that the amount of the additive sufficient to produce a product with desired properties depends on the moisture content of the starting crude natural honey and can be varied from about 300:100 to about 50:100 to the crude honey. Thanks to glucose being a natural component of honey, and due to glucose in the product according to the invention is present in crystalline form, it does not affect honey gustatory properties even when added in relatively high amounts.

As has been found in the present invention, adding glucose to honey not only accelerates natural crystallization of honey, but in combination with continuous mixing results in formation of free flowing particulate product having highly crystalline structure and uniform composition and exhibiting the native properties of the starting crude honey.

Since the process according to the invention is performed in conditions close to the conditions of natural crystallization of honey, the product produced by the method of the invention exhibits the crystalline structure similar to the structure of a naturally crystallized (`granulated') honey, which provides for the prolonged preservation of native properties of honey.

Without being bound by a particular theory, the inventors of the present invention believes that mixing provides the exposure of new portions of honey to the ambient atmosphere and could in this way facilitate the formation of crystalline granules. Also, it is known that glucose facilitates crystallization of honey and that honey with higher glucose content crystallizes faster than honey with e.g. high relative amount of fructose. Though in natural conditions, bulk crystallization is a very slow process, according to the present invention, it has been found that the obtained particles of honey product hardened relatively fast, most likely, due to their fast transformation into crystalline form.

That is possibly why admixing glucose into a honey composition results in a free flowing form of honey, which is composed of particles similar in structure to the crystals of natural honey, and which retains useful properties of natural crystallized honey.

Types of glucose have moisture content below 10% and include but are not limited to chemically pure glucose, pharmaceutical grade glucose, anhydrous glucose, glucose monohydrate (dextrose).

A free flowing particulate honey product comprising natural honey of the invention is characterized by expressed crystallinity characterized by X-ray powder diffraction pattern having at least two peaks in degrees 2θ that are identified as characteristic peaks for diffraction pattern of crystalline glucose.

Preferably, a free flowing particulate honey product comprising natural honey is characterized by X-ray powder diffraction pattern having at least three peaks in degrees 2θ that are identified as characteristic peaks for diffraction pattern of crystalline glucose.

In one embodiment, the free flowing particulate honey product is characterized by X-ray powder diffraction pattern having at least one peak in degrees 2θ selected from 28,3; 31.1; 37.1, 40.3, 41.4 ±0.3 degree.

In one embodiment, the free flowing particulate honey product is characterized by X-ray powder diffraction pattern having at least three peaks in degrees 2θ selected from 28,3; 31.1; 37.1, 40.3, 41.4 ±0.3 degree.

In one embodiment, the total glucose content of the honey product is from 50 to 85% by weight of the honey product, including inherent glucose which is normally 38-40% weight by weight of crude honey, and added glucose, which is 35 to 75% weight of glucose to 65 - 25% of crude honey, by the total weight of the product.

In one embodiment, the product is characterized by the degree of crystallinity not less than 30%, preferably not less than 40%, more preferably not less than 50%, more preferably not less than 60%, more preferably not less than 70%, more preferably not less than 80%, and most preferably not less than 90%.

In one embodiment, the product is characterized by moisture content of approximately 2% to 8%, preferably 3% to 6%.

In one embodiment, a free flowing granulated particulate crystallized honey product comprising natural honey crystallized with glucose is provided, wherein the product is characterized by:
(a) X-ray powder diffraction pattern having at least three peaks in degrees 2θ that are identified as characteristic peaks of crystalline glucose monohydrate, selected from 2θ= 28.3; 31.1; 37.1, 40.3, 41.4 ±0.3 degree; and
(b) moisture content of approximately 2% to 8%, preferably approximately 3% to 6%.

In one embodiment, the product comprises powder-like particles having irregular shape with the average size from 100 micron to 1 mm, preferably from 300 micron to 500 micron. In another embodiment, the product comprises particles of irregular shape with average size from 1 to 10 mm, preferably, from 1 mm to 5 mm, more preferable, from 2 to 5 mm.

In another embodiment, the product comprises particles of irregular shape with average size from 5 mm to 30 mm, preferably, up to about 20mm, more preferable from 5 to 20 mm.

In one embodiment, honey granules have irregular shape and average size selected from the following ranges: from 1 to 5 mm, from 1 mm to 10 mm, from 2 mm to 5 mm, from 5 mm to 20 mm, from 5 mm to 30 mm.

In one embodiment, the product is characterized by diastase activity index that is not less than 90% of the diastase index of a crude honey used to prepare the product, calculated based on the weight of the crude honey.

Preferably, the diastase index is not less than 90%, preferably not less than 95%, more preferably not less than 98% of the diastase activity index of the starting crude honey, calculated based on the crude honey content used to prepare the product according to the invention. In other words the diastase number of the product can be calculated for the ratio of honey to glucose 1:1 as 50% of the diastase index of the crude honey, and for the ratio of honey to glucose 1:2, as 33.3% of the diastase index of the crude honey.

In one embodiment, the product is characterized by not less than 80 to 99% mass of reducing sugars by mass of solids.

In another aspect of the invention, a free flowing particulate honey product exhibiting the native properties of the starting crude honey according to the first aspect of the invention is intended for use in preparing dietetic and non-dietetic foodstuff selected from but not limited, bread, bakery, pastry, confectionery, candies.

A free flowing particulate honey product for preparing beverages and drinks according to the invention optionally further comprises a second particulate component selected from but not limited to, tea, coffee, cacao, dried herbs and herbal mixtures, dried natural juice compositions, dry mixtures for preparing drinks.

In another aspect of the invention, a free flowing particulate honey product is in a packed dosage form. The dosage form can be selected from tea unit dosage form suitable for preparing a single cup of tea, coffee, juice drink, etc.

In another aspect of the invention, a free flowing particulate honey product exhibiting the native properties of the starting crude honey is for use in preparing cosmetic formulations, hygienic and medical applications.

In another aspect of the invention, a healthy free flowing particulate product is provided selected from corn flakes, muesli, cereals, dry breakfasts, comprising a free flowing product of any one of the aspects as set forth above.

In another aspect of the invention, a free flowing particulate honey product is for use in preparing beverages and drinks. Advantageously, the product according to the invention gives a clear water solution, unlike known honey products, e.g. the product as disclosed in RU2309609, which gives cloudy solutions due to the presence of starch or flour in the product.

In another aspect of the invention, a honey based beverage or drink is provided which is characterized by Gothe index corresponding to the Gothe index of the crude honey used to prepare the product of the invention.

A honey drink according to the invention is selected from beer, kvass, mead, saloop, sbiten and other honey drinks.

In another aspect of the invention, a product is for use in preparing milk based products, such as milk drinks, milk shakes, sour milk products, such as curds, curd masses, curdled milk, kefir, yoghurt, etc.

In another aspect of the invention, a method for preparing a free flowing particulate honey product comprising natural honey is provided, the method comprising the steps of mixing a crude honey with a glucose as a crystallization agent at a temperature providing the biological activity of honey is preserved, to obtain a particulate honey product according to any one of the above aspects.

In one embodiment, a method for producing a free flowing granulated particulate crystallized honey product comprising natural honey is provided, the method comprising the steps of:
mixing a crude honey with glucose as a crystallization agent at a temperature not higher than 50°C providing the biological activity of honey is preserved, wherein the mixing is performed until granulated honey particles are formed; and
holding the formed granulated particles until hardening to obtain a particulate crystallized honey product having the moisture level of about 2 to 8% mass.

In one embodiment, the honey granules are formed having the average size selected from the intervals: from 1 to 5 mm, from 1 mm to 10 mm, from 2 mm to 5 mm, from 5 mm to 20 mm, from 5 mm to 30 mm.

In one embodiment, mixing is performed during the period of less than 15 min.

In one embodiment, a method for preparing a free flowing particulate honey product is performed in one step. Alternatively, glucose can be added step-wise to provide the optimal amount of glucose is added.

In another embodiment, a method for preparing a free flowing particulate honey product optionally comprises a step of holding a mixture for facilitating the hardening of the particles.

In one embodiment, a crude honey having the humidity of 11-21% mass is mixed with glucose at the ratio of honey: glucose 100: (50-300).

In one embodiment, the mixing is performed in a mechanical mixing device, such as food chopper, screw mixer, shredder, planetary mixer or the like. Preferably, the mixing device is provided by mixing vanes or a mixing spiral or a screw capable of disintegrating or chopping the product mass into smaller parts, preferably into particles of the desired particle range.

In one embodiment, the temperature of mixing is not higher than 50°C, preferably not higher than 45°C, more preferable not higher than 35°C, most preferably not higher than 30°C.

In one embodiment, the step of mixing optionally comprises admixing one or more of the following ingredients: flower pollen, propolis, royal jelly, bee-bread, vitamins, bioactive substances, mineral substances, sugars, herb extracts, flavoring agents or a mixture thereof.

In one embodiment, glucose has moisture up to 10% and is selected from dextrose monohydrate, food dextrose monohydrate, chemically pure dextrose monohydrate, L-glucose, derivatives, stereoisomers and rotamers thereof.

According to another aspect, the present disclosure relates to use of a product according to any of the above-identified embodiments for preparing food products, beverages, cosmetic formulations, hygienic and medical applications.

In one embodiment, the food products are dietetic and non-dietetic foodstuff selected from bread, bakery, pastry, confectionery, candies.

In one embodiment, the beverages further comprise a second particulate component selected from tea, coffee, cacao, dried herbs and herbal mixtures, dried natural juice compositions, dry mixtures for preparing drinks.

In one embodiment said beverages are selected from beer, kvass, mead, saloop, sbiten, other honey drinks, hot and cold tea, coffee, cacao, chocolate, juice, and similar beverages.

In one embodiment said beverages are milk based products selected from milk drinks, milk shakes, sour milk products, such as curds, curd masses, curdled milk, kefir, youghurt, etc.

The invention will be further described in more detail with reference to example embodiments and figures which are provided for illustration only and do not intend to limit the scope of the invention which is defined by the accompanying claims.

### DEFINITIONS

The term "free flowing" relates to the capability of a product of the invention to flow. Flowability of a product according to the invention can be determined e.g. by Flowability tester BEP According to EP (Antech Solutions Ltd., Ireland). Other methods known by one skilled in the art can be also used for measuring flowability.

As used herein, the term "particulate" relates to a product in the form of irregular shaped particles (grains) in general having the total volume of up to 30cm³ in size. For the purposes of present application the term particulate includes also a fine powder formed in the process of the present invention or produced by grinding. A particulate product of the invention can be classified using standard methods into various size categories, generally, a powder having the size of less than 1 mm; particles having the size of 1 mm to 10 mm and agglomerates having size bigger than 10 mm. any other specific particle size can be provided using sieves of required mesh sizes.

Advantageously, the obtained particulate product can be cast into a wide variety of shapes and sizes, including but not limited to chupa-chups-like products, bull-eye lozenges, or any other shape as desired and commercially attractable. It can be also compacted into tablet form of any suitable size using commercially available tablet presses or the like apparatuses, or extruded using conventional techniques.

As used herein, the term "expressed crystallinity" relates to a product demonstrating at least one peak detectable by x-ray diffraction analysis (i.e. a peak having relative intensity I/lo at least 10) and having a degree of crystallinity as measured e.g. by Differential Scanning Calorimetry not less than 20%, preferably not less than 30%; more preferably not less than 40%; more preferably not less than 50%; more preferably not less than 60%; more preferably not less than 70%; more preferably not less than 80%; more preferably not less than 90%, and most preferably not less than 95% as measured by any available method.

In the present application, the term "biological activity" means that a honey product according to the invention has a measurable enzyme activity similar to that of crude natural honey used for producing the product as calculated by weight of honey. For instance, biological activity can be measured in terms of diastase activity, which is also called Diastase index. Diastase, or amylase, is an enzyme which catalyses decomposition of starches into simpler products such as dextrins and maltose.

Diastase activity according to the present invention is measured as Gothe units defined as amount of 1 % starch solution in milliliters cleaved by diastase comprised in 1 g of a honey (on the dry basis) within one hour at 40 ± 1 °C. The diastatic index can be also measured by the Schade method and the unit is also called the Schade unit or the Gothe unit. To greatly oversimplify an exacting procedure, the honey is mixed with a starch solution and iodine added at intervals. Iodine turns the starch blue, since diastase converts the starch to sugar; the more starch converted to sugar, the less blue. The time needed for the solution to reach an absorbance of 0.235 (0.301 in the German standard) is noted. 300 divided by the time in minutes gives the DN number. In Europe, for example, the minimum permitted DN for honey is 8 DN per gram. Since honeys from certain species of flower naturally have much lower levels of diastase, for those the DN unit shall be "not less than 3 Schade Units". Gothe index is also used in the Regulations for veterinary-sanitary examination of commercial honey (as approved by the Ministry of Agriculture of the Russian Federation (Minselkhozprod RF) on 18.07.1995 N 13-7-2/365).

Any other methods of determining diastatic activity can be used in the invention. Further, the activity of any other biologically active substances including enzymes and vitamins can be measured by any available method to establish the biological activity of a product of the invention.

### BRIEF DESCRIPTION OF THE DRAWINGS

Fig 1 X-ray diffraction pattern of a particulate honey product according to the invention, see Example 3.
Fig. 2 X-ray diffraction pattern of a particulate honey product prepared according to RU2309609, comparative example 6
Fig. 3 X-ray diffraction pattern of a dried powder honey product available from Stakich. Inc, Bloomfield Hills, MI 48303 U.S.A, comparative example 5
Fig. 4 X-ray diffraction pattern of a liquid buckwheat-rosebay honey used to prepare the product according to the invention, Example 3.
Fig. 5 X-ray diffraction pattern of a slightly crystallized wildflower honey
Fig. 6 X-ray diffraction pattern of glucose monohydrate used to prepare the product according to Example 3 of the description of the invention.

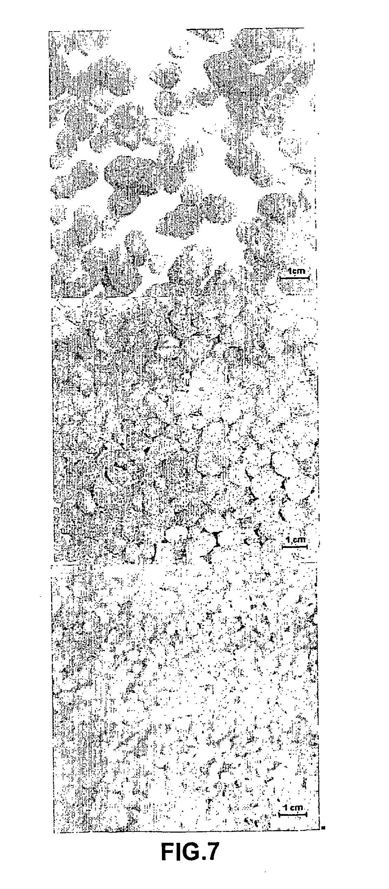

Fig. 7 - photographs of a particulate free flowing honey product according to the invention.

### DETAILED DESCRIPTION OF THE INVENTION

A free flowing product and method according to the invention will be now described in further detail with reference to example embodiments.

The main ingredient in the present food product is honey which is mixed with glucose to result in a free flowing particulate honey product comprising crystals on natural honey characterized by X-ray powder diffraction pattern having at least two peaks in degrees 2θ that are identified as characteristic peaks for diffraction pattern of crystalline glucose.

Typical extracted honey has a solids content of from about 79% to about 89% and a water content of from about 11 % to about 21%, the contents of solids and water being based on the total weight of the honey. For the purpose of this disclosure, honey as referred to herein shall include both water and solids. In forming the honey product of the present invention, it is preferred to use honey having a solids content from 85% to 79% by weight of the honey. As mentioned above, the honey is mixed with glucose to form the honey product in accordance with the present invention.

In particular, to form the honey product in accordance with the present invention, honey is placed in a mixing vessel. Preferably, the water content is measured for the current batch of honey. The predetermined amount of glucose selected depending on the measured or otherwise known water content is incorporated into the honey and mixed thoroughly to ensure even glucose distribution in the honey. The honey-glucose product mixture is then maintained at a temperature of not more than 35-45C with continuous mixing to ensure the biologically active properties of honey is preserved in the product. During this process, the moisture level is controlled by controlling the time and temperature during processing. The obtained particulate honey product has the moisture level about 2 to 8% mass based on the total mass of the product.

The step of admixing the additive into honey and granulating can be performed in one step. This significantly simplifies and expedites the process of preparing a free-flowing product.

The time required for mixing from the start to till a final granulated or powdered product is obtained depends on the amount of the starting material, moisture content of the starting materials and amount of glucose taken.

Glucose for use in a method according to the invention has less than 10% moisture content and can be selected from dextrose monohydrate, food dextrose monohydrate, chemically pure dextrose monohydrate, L-glucose, derivatives, stereoisomers and rotamers thereof, which are commercially available.

Experiments carried out by the inventor have shown that the process can take less than 1 minute.

The temperature of the mixture maintained during the process generally falls within the range of +20° C to + 30° C. To compare, mixing in the method according to RUNº 2309609 is performed at a temperature from +30 to +35° C to lowering the viscosity of honey, and the final product is obtained after about 15 min.

The mixing mode is selected in view of a number of factors including desirable form of final product, scale of production, available equipment etc.

In one preferred embodiment, mixing is performed in a feed chopper, such as professional food chopper. The food chopper or cutter produced by Stephan Food Service Equipment GmbH, Germany can be used in the process according to the present invention.

According to one of the embodiments of the present invention, mixing is carried out at the ratio of honey: glucose 100: (50- 300), or, with reference to a honey humidity, in the ratio of honey: moisture: glucose 100: (11-21): (50-300).

Preferably, the amount of glucose added is chosen depending on the moisture level of crude honey and the desired properties of the obtained honey product, and further, with regard to the processing time, the mixer speed, desired form of the final product, desired particle size, etc. Possible forms include, but are not limited to: granules, grains, powder, etc.

Based on the experiments performed by the inventor of the present invention, when the moisture level of crude honey is from about 11% mass to about 14% mass, glucose is preferably added at the ratio of honey: glucose 100: (130-150).

When the moisture level of crude honey is from above 14% mass to about 16% mass, glucose is preferably added in the ratio of honey: glucose 100: (150-170).

When the moisture level of crude honey is from above 16% mass to about 19% mass, glucose is preferably added in the ratio of honey: glucose 100: (160-180).

When the moisture level of crude honey is from above 19% mass to about 21% mass, glucose is added in the ratio of honey: glucose 100: (180-190)

The shape and consistence of the final product is determined among other factors by the amount of glucose taken and chosen regimen of mixing.

In certain embodiments, glucose can be added in one portion at the beginning of mixing. In other embodiment, glucose is added step wise, for example, if it is required to obtain a more homogenous mixture or when it is necessary to find the optimal ratio and conditions for implementation of the method.

Also, the amount of glucose can be selected in view of desirable processing time and working regimen for the mixer.

Additionally, mixing can be stopped before free flowing particles are formed. In this case the obtained product will have viscous dough-like body "fondant" or "sherbet", and as such can be used, for example in producing various confectionary products. It was wholly surprisingly found that glucose integrates completely when intensively mixed with the basic crude honey to form a homogenous particulate product which is a highly water-soluble. The product is initially powdery throughout the process and then changes into a very fine granule without the mixture becoming sticky or losing its flowability. Surprisingly, the reaction proceeds in solid state. If a sample is taken from the stirred mixture after approximately 1-5 minutes, this dissolves quantitatively in water within a few seconds and produces a completely clear solution.

Even large batches of 400- 600 kg of honey can be processed with glucose into a free flowing particulate product in less than 15 minutes. The speed of the reaction and the simplicity of the process were unforeseeable and are completely unexpected. It is also completely unexpected that under the described mild reaction conditions the glucose added to the basic crude honey react totally with the formation of uniformly structured crystalline honey product. An extremely intimate, very homogeneous mixture between the glucose and the basic honey forms. The honey-glucose particles granule can also have small voids and can give the granules a honeycomb-like structure.

### EXAMPLES

### Preparation of honey granules

### Example 1 Preparation of particulate honey product in a blender

A. In a mixing vessel of 15-speed blender (Braun MR-6550-M CA MN) 300 g of 1:1.7 (honey: glucose) mixture of buckwheat honey (having 18%humidity) and glucose monohydrate is placed in and mixed for 20 seconds at room temperature and a speed of 6,000 rpm. The obtained particulate light brown honey product has the particle size from 100 micron to 5 mm. The product can be further sieved into more narrow fractions to obtain the desirable particle size.

B. In the above experiment stirring speed is increased to maximum 10,500 rpm after 25 seconds and mixing continued for another 12 seconds. Dry light-brown powder having the particle size of 100 micron to 5 mm is obtained.

### Example 2

A food chopper Bosch MMR 0801 is charged with 100 g of honey and 170 g of glucose. The food processor is turned on for 2,000 rpm and after 30 seconds the product is obtained. The product comprises granules having the size from 1 to 10mm and a powder of less than 1 mm. The mixture is optionally further sieved to obtain uniform granular products with predetermined size range. Seasoning the obtained product at the ambient temperature for 3-4 days, preferably 5-7 days results in a product with increased hardness of granules.

### Example 3

14 kg of honey (18% humidity) is loaded into a grinding mixer IS-120 (Molmash, Russia) equipped with water cooling jacket and stirring begins at 16 rpm. While stirring, chemically pure glucose (humidity 6%) is added portionwise. After 24 kg of glucose is added and the mixture becomes thick and homogeneous, the speed is switched to 3,000 rpm. Cold water with temperature up to 18°C is fed into the cooling jacket during the process. In 7 minutes the process is completed and about 38 kg of honey-comprising granules obtained. The granules have the size mainly from 5 to 30 mm and smaller. The granules can be further sieved and classified into more narrow fractions to obtain a product of desired particle size and properties.

### Example 4. Large scale honey granulation

A. 15 kg of 1:1,3 honey (12% humidity)-glucose mixture is charged into a KZL75 stirring granulator (Jiangsu Guibao Group Co., Ltd.) at room temperature. The speed is set to 203, then switched to 2,830 rpm (power 5.5/3.7kW). After 10 minutes of said regimen honey granules are obtained.

B. In the above experiment, mixing time is extended to 20 minutes. The obtained product has the form of a powder.

### Comparative Example 5 obtained according to the teaching of WO 2005/053431

A honey product was commercially obtained from Stakich Inc, Bloomfield Hills, MI 48303 U.S.A, which is said to be "derived from 100% pure raw honey by eliminating moisture" (hftp://www.stakich.com/hfolder/honeypowder5Ib.htm The purchased powder honey product was subjected to X-ray diffraction analysis and assayed to obtain the data in Table 7.

### Comparative Example 6 obtained according to the teaching of RU2309609

A honey product was prepared similar to Example 2 by mixing a crude honey with starch with subsequent step of drying at the temperature of 40C. The obtained powder was subjected to X-ray diffraction analysis.

### Test Results

### X-ray diffraction analysis of honey granules

X-ray diffraction patterns were obtained using Difray apparatus (available from JSC "Scientific Instruments", Saint-Petersburg, Russian Federation) with a curved position detector (CPD) at Cu-Kα emission in 2θ range from 16 to 59°. Reference diffraction pattern of alumina α-Al₂O₃ was used in the analysis.

The following samples were assayed:

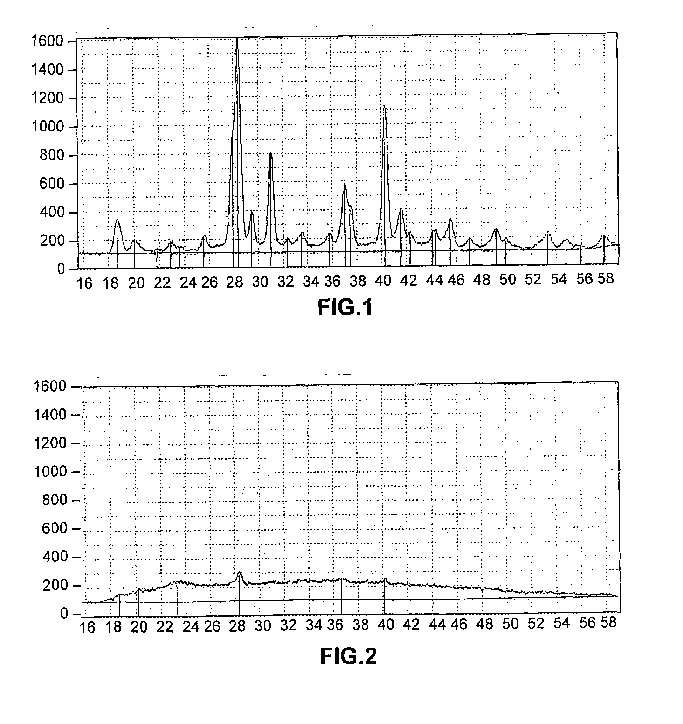

Sample 1 "Honey product according to the invention" is a mixture of honey **granules** (0.1-10.0mm) and honey powder prepared using the procedure of Example (4A). Sample 1A has an XRPD pattern substantially as shown in Figure 1. Characteristic XRPD peak locations (expressed in degrees 2θ ± 0.2 * 2θ) and d-spacing for Sample 1 are shown in Table 1 below.

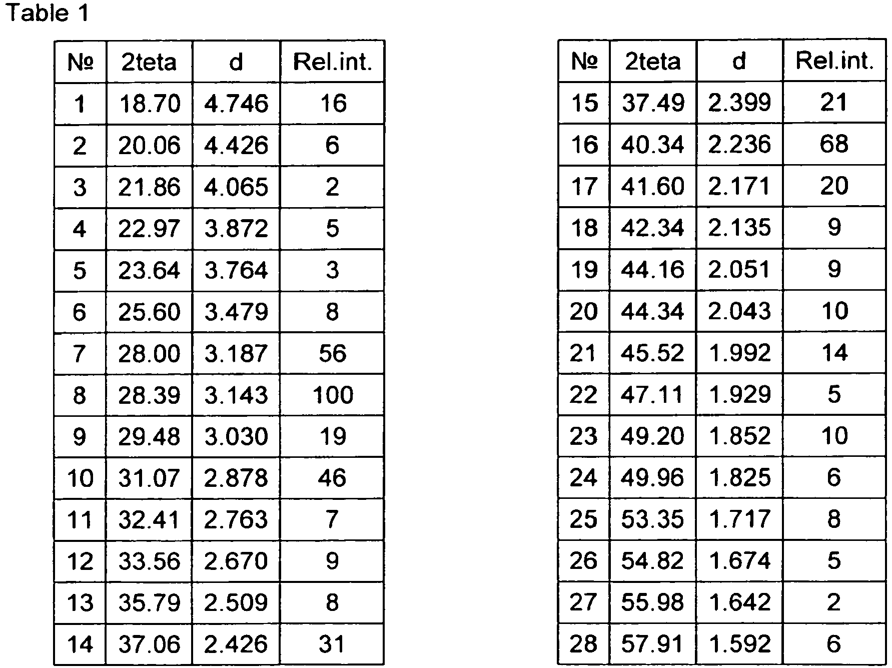

As seen in the table, the most distinctive peaks with relative intensity above 10 are located at degrees 2θ ± 0.2 18.7, 28.00, 28.4, 29.58, 31.1, 37.1, 37.5, 40.3, 41.6, 44.3, 45.5, 49.2.

For the purposes of comparison, the following other samples have been assayed by the XRPD method:

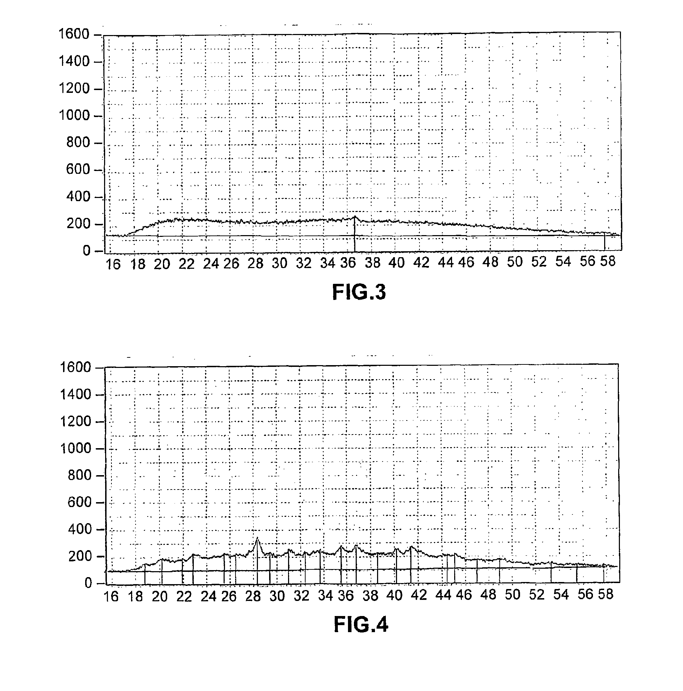

Sample 2 Liquid buckwheat-rosebay honey; X ray diffraction pattern is shown in Fig. 4; characteristic XRPD peaks expressed in degrees 2θ are presented in Table 2 below.

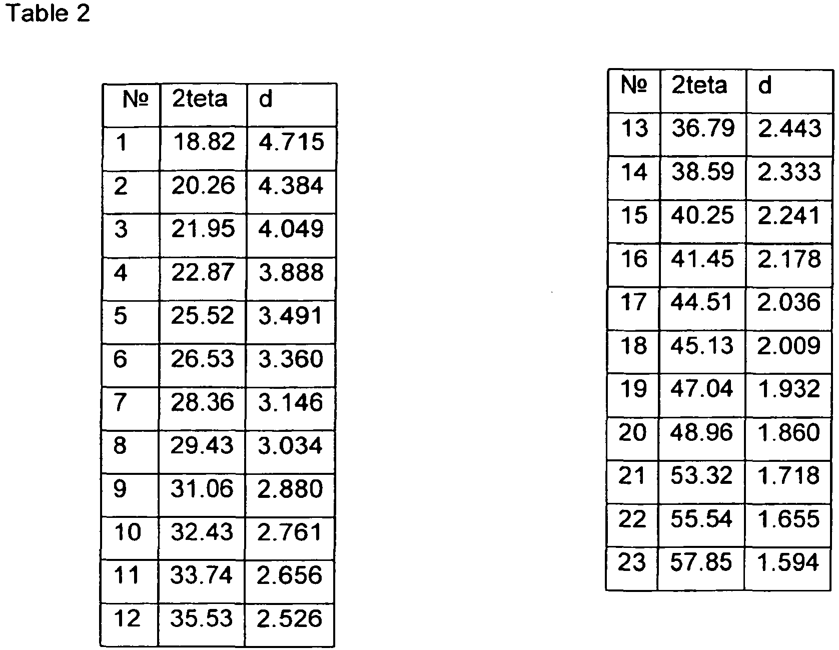

Sample 3. Low crystallized wildflower honey

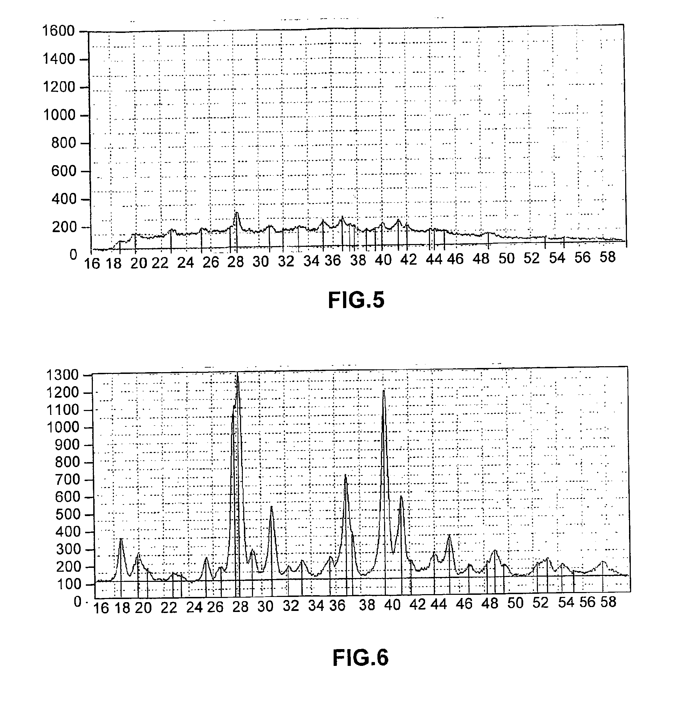

X ray diffraction pattern is shown in Fig. 5 (Cu through Cu foil 0,05mm 300s CPD 15+17°), characteristic XRPD Peaks (expressed in degrees 2θ) are presented in

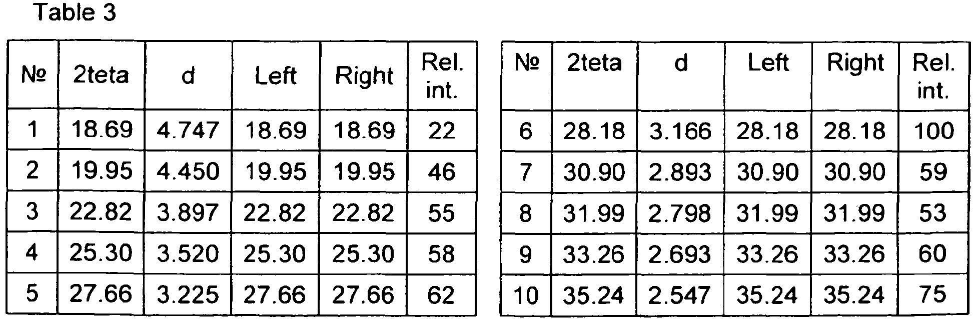

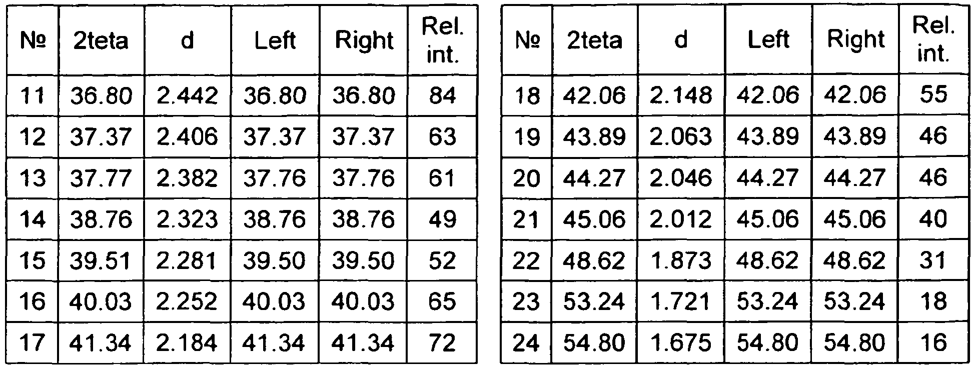

Sample 4 Glucose monohydrate used for the preparation of product of the invention X-ray diffraction pattern is shown in Fig. 6; characteristic XRPD peaks expressed in degrees 2θ are presented in Table 4 below.

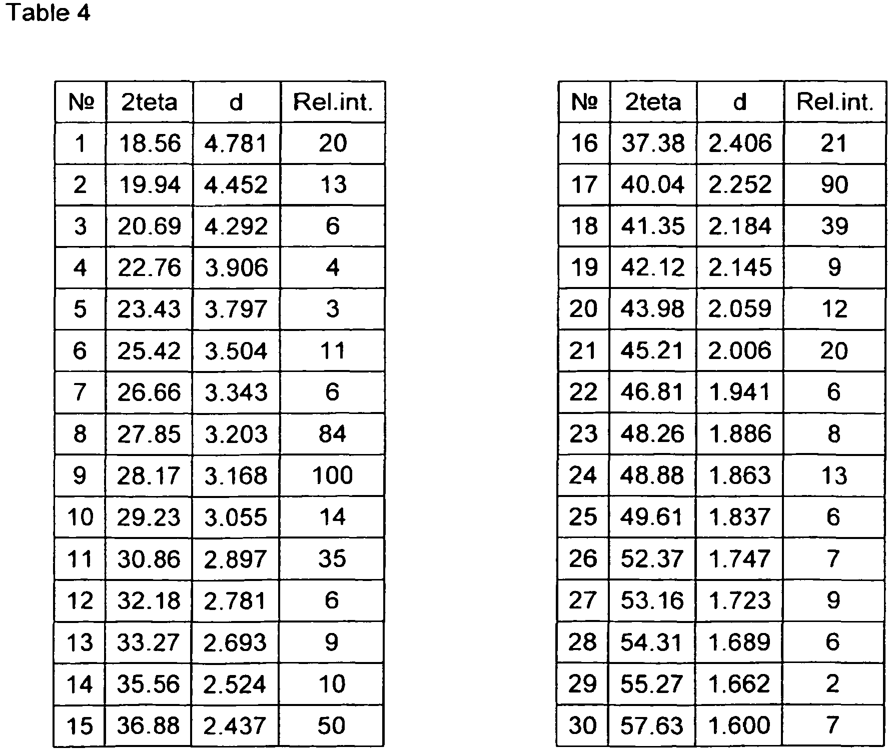

Sample 5 (Comparative example 5) Dried Honey product produced by Stakich. Inc, Bloomfield Hills, MI 48303 U.S.A, X-ray diffraction pattern is shown in Fig .2; characteristic XRPD peaks expressed in degrees 2θ are presented in Table 5 below.

**Table 5**

| Nº | 2teta | d |
|---|---|---|
| 1 | 36.68 | 2.450 |
| 2 | 57.75 | 1.596 |

Sample 6 (Comparative Example 6) Granulated Honey product prepared according to RU2309609, Diffraction pattern is shown in Fig. 3; characteristic XRPD Peaks (expressed in degrees 2θ) of granulated honey RU2309609 are presented in Table 6

**Table 6**

| Nº | 2teta | d |
|---|---|---|
| 1 | 18.73 | 4.738 |
| 2 | 20.27 | 4.380 |
| 3 | 23.29 | 3.819 |
| 4 | 28.36 | 3.146 |
| 5 | 36.68 | 2.450 |
| 6 | 40.19 | 2.243 |

Further, X-ray diffraction patterns were obtained for sucrose; fructose, and Al₂O₃ as a reference.

Analysis of the XRPD patterns has revealed the following:

The honey product according to the invention (Sample 1, Fig.1) is a crystalline substance with multiple diffraction peaks including those of high intensity.

Dried honey (Sample 5, Fig.5) is an essentially amorphous substance with two amorphous rings at 22° and 38°. Granulated honey (Sample 6, Fig. 6) is an essentially amorphous substance with a broad halo in the reading range (17-59°), the maximum located at about 36°, and several weak diffraction peaks.

Liquid buckwheat -rosebay honey (Sample 2, Fig.2) is also an essentially amorphous substance. A broad halo and weak diffraction peaks were observed. However, amount of diffraction peaks in the sample is higher than in Granulated honey, Sample 6, Table 2), i.e. the amount of crystals in the crude liquid honey is higher than in the granulated honey obtained according to RU2309609 using starch as an additive. Diffraction pattern of the wildflower low crystallized honey (Sample 3, Fig. 3) was essentially similar to that of the liquid buckwheat-rosebay honey with more intense peaks.

Since the position of major peaks was essentially the same in the product of the invention, both crude honeys and the Glucose monohydrate (Sample 4, Fig.4), it can be concluded that the product of the invention is comprised of crystals similar to those that are formed by honey in natural conditions and which are characterized by the diffraction pattern specific for glucose. Therefore, as follow from the x ray diffraction data, a product of the present invention is characterized by expressed crystallinity wherein the crystalline phase is essentially glucose monohydrate crystals. The five most pronounced peaks are located at degrees 2θ= 28.3; 31.1; 37.1, 40.3, 41.4 ± 0.3.

The results of experiments suggest that the natural honey processed according to the present invention has crystals similar to crystals of natural honey and hence, can be expected to retain the native properties of crude honey which are not affected by preparation process of the invention. Thus, the following experiments were carried out to determine the quality, biological activity and other properties of the honey product according to the invention.

### Effect of temperature on the product quality

A series of experiments have been carried out in order to demonstrate an effect of temperature on the quality of the product, including the diastase index and HMF content. Hydroxymethylfurfural (5-Hydroxymethyl-2-furfuraldehyde, HMF) is a cyclic aldehyde, the principal decomposition product of the acid-catalysed hydrolysis of glucose and fructose, and is often used to evaluate the degree of degradation of honeys. Mixing/granulation was performed similar to Example 3. For these experiments acacia honey with 20% humidity and alimentary glucose (Agroros, RF) was used. The mixing vessel was equipped with a heating jacket and the temperature was maintained at a level selected in the range of +10 to +60°C. The ingredients were stored at room temperature before, then heated fast to the preselected temperature and immediately placed into the mixing vessel. The results are summarized in Table 7.

**Table 7**

| Temperature of mixing, °C | Granulation time, minutes | Granules appearance | Hydroximethylfurfurol (HMF), test |
|---|---|---|---|
| Crude honey at +20°C | N/A | N/A | negative |
| 0°C | 10 minutes | Normal | |
| +15°C | 8 minutes | Normal | negative |
| +30°C | 7 minutes | Normal | negative |
| +50°C | 5 minutes | Normal | negative |
| +60°C | 4 minutes | Normal | positive |

The above results demonstrate that a method according to the invention provides honey granulation in a wide temperature range in the absence of honey deterioration and providing the native properties of honey are preserved. To compare: +14°C is known to be the optimal temperature for honey crystallization. Honey is believed normally not to granulate at temperatures below +4°C or above +27°C. At the same time, these results demonstrate that even short time heating to about +60°C results in HMF formation which makes processes employing lower temperatures desirable.

### Flowability tests

1000 g of a granulated product prepared according to Example 3 was stored in unsealed tin at room temperature and ambient humidity. After 6, 10, 12, and 14 months no signs of caking were observed. The flowability test of a free flowing product of the present invention provides the flowability value which is approximately equal to the upper limit of particle size in the batch of honey particles of the invention. In other words, a honey product having batch particle size of approximately 1 to 4 mm is free flowing on BEP tester through the opening having respectively the size of 4 mm. See table 8.

**Table 8**

| Particle size, mm | BEP tester opening, mm |
|---|---|
| 1,0-4,0 | 4 mm |
| 3,0-7,5 | 8 mm |
| 5,0 - 10,00 | 10mm |

Advantageously, a honey product according to the invention is resistant to caking with time. This provides the increased shelf life time of the honey product, e, g, storing the product for approximately a year do not deteriorate the flowability properties of the product.

### Effects of honey humidity and amount of glucose added

Buckwheat-rosebay honey was used in the experiment using a product obtained according to Example 2

**Table 9**

| Nº | Crude honey weight (g) | Crude honey humidity (%) | Gluco se (g) | Product according to the invention | Comments |
|---|---|---|---|---|---|
| 1 | 1000 | 11% | 1350-1450 | Granules sized 100micron-15mm | Granules were formed within 6 minutes |
| 2 | 1000 | 15% | 1550-1650 | Granules sized 100micron-15mm | Granules were formed within 6 minutes |
| 3 | 1000 | 18% | 1650-1750 | Granules sized 100 micron-15mm | Granules were formed within 6 minutes |
| 4 | 1000 | 18% | <1650 (500) | Thick doughy mass | Free flowing product was not obtained |
| 5 | 1000 | 18% | >1750 (3000) | Sweet off-white powder with honey flavor | |
| 6 | 1000 | 21% | 1700-1900 | Granules sized 100micron-15mm | Granules were formed within 6 minutes |

The above results demonstrate that the amount of glucose is preferably selected with account to humidity of crude honey. Our experiments has shown that the higher humidity is, the lower honey: glucose ratio will normally be, preferably falling within range 100:130 - 100:190

When the moisture level of crude honey is from about 11 % mass to about 14% mass, glucose is preferably added at the ratio of honey: glucose 100: (130-150). When the moisture level of crude honey is from above 14% mass to about 16% mass, glucose is preferably added in the ratio of honey: glucose 100: (150-170). When the moisture level of crude honey is from above 16% mass to about 19% mass, glucose is preferably added in the ratio of honey: glucose 100: (160-180). When the moisture level of crude honey is from above 19% mass to about 21% mass, glucose is added in the ratio of honey: glucose 100: (180-190)

If the amount of glucose is not sufficient to obtain free flowing granules or powder, the product can nevertheless be used e.g. as a thick honey spread of as an additive in cooking. If honey: glucose ratio is too low, granules cannot be obtained and produced powder is too sweet, nevertheless, it can be used in cookery as a sweetening and flavoring agent. In general, according to the invention a glucose can be taken in the ration ranging from 50:100 to 300:100 to a crude honey used.

### Diastase activity and reducing sugar content in the honey product

Similar to Example 2, different types of honey were mixed 1:1,7 with glucose monohydrate. Total amount of mixture was 270 g. Granules produced were assayed for reducing honey content and diastase index. Diastase index and reducing sugars were measured as set forth by Regulations N 13-7-2/365 (see above).

**Table 10**

| Honey | Humidity of crude honey | Diastase index in the crude honey | Humidity of the product | Reducing sugars in the product (based on solids) | Diastase index in the product (Gothe units*) |
|---|---|---|---|---|---|
| locust | 18% | 5 | 6% | 82% | 1,8 |
| Floral honey | 18% | 30 | 6% | 91,2% | 11 |
| Buckwheat honey | 18% | 50 | 6% | 98.5 % | 18 |

Measured immediately after completion of the process

This test results show that diastatic activity normalized to the content of the crude honey in the product remains unchanged after treatment by a process of the invention, thus suggesting that the process of the invention do not deteriorate the biological activity of a crude honey

### Use of honey products

Products prepared by methods of present invention may be used either per se, in composition with other additives, or in preparation of food products and beverages.

### Honey-beebread granules

In method as in the Example (2), 50 g of buckwheat honey is replaced with equal amount of bee-bread. Physical properties of the obtained product is similar to those produced without the bee-bread additive. TLC analysis demonstrates detectable amounts of all essential amino acids.

### Honey granules with vitamin C

Following the formulation of glucose-vitamin C drug produce by ICN Tomskhimpharm (Tomsk, RF) ascorbic acid is added to the honey-glucose mixture in amount 100:877 by weight. The mixture is processed as described in Example 4B. The produced powder can be further administered in compensating or preventing deficit of vitamin C in humans or domestic animals.

Our experiments demonstrate the a mixture for use in methods according to the invention can comprise up to 50% of dry powdered additives without compromising physical properties of the product obtained.

### Honey cake

### Ingredients:

3 oz Butter
2 Eggs beaten
6 oz honey granules prepared as in Example 2
8 oz self raising flour
1 level teaspoon baking powder

Oven is set to 350F. A cake tin is greased. Butter and half of the honey granules are mixed together in a bowl. Then, eggs are added, and after these rest of the honey granules. Ingredients are mixed thoroughly until homogenous mixture is obtained. Flour and baking powder are sifted together and stirred into the honey mixture. The mixture is transferred to the tin and baked for about 40 minutes.

A product of the invention may be used in cookery and food industry as a wholesome substitute for sugar (sucrose). Amount of the product to replace a given amount of sucrose can be readily by any person. It is well known that a floral honey is relatively sweeter as compared to sucrose which in turn is sweeter than glucose. Since the average sweetness of honey is considered as being 1 to 1.5 times sweeter (on a dry weight basis) than sugar, taking into account water content of honey it is recommended to substitute 100 g of sugar by 120 g of honey (see e.g. NHB and AIB. 1990. Honey. Its Utilization in Bakery Products. National Honey Board, Longmont, Colorado, American Institute of Baking, Manhattan, Kansas), the amount of the product according to the invention having ratio honey: glucose 1:1,7 to substitute 100 g of sugar can be calculated as 120(honey):100(sucrose):74(glucose), i.e. 110 g of the product according to the invention. Thus, given honey:glucose ratio used to prepare the product one could easily estimate an amount of the product necessary to replace a given amount of sucrose.

Though actual sweetness of honey may vary, the above information is sufficient to provide a guideline for a more accurate calculation based on type of honey and published data to select an optimal amount of honey product of the present invention for a specific purpose.

### Dry honey-fruit drink

A. In Example 2, glucose is premixed 10:1 (mass) with powder lemon juice (The Great American Spice Company). About 2 tablespoons of produced granules are used to obtain 1 glass of a refreshing drink.

B. Honey-comprising powder prepared as in Example 1B is mixed 50:50 with the dry juice to obtain a reconstitutable honey-lemon juice.

### Dry breakfast with honey granules

Honey granules of Example 3 are mixed 1:5 by mass with oatmeal. The obtained mixture can be used as a healthy food with addition of water, milk, cream, or the like in desirable proportion.

### Healthy honey curd

Honey granules of Example 3 was mixed 1:20 by weigh with a defatted curd to obtain honey tasting mildly sweet curd.

### Tea bags with honey powder

Honey powder produced according to the Example 4B was mixed 100:50 by weight with a black tea (Harney&Sons, available from the internet shop www.harney.ru) and packed into teabags (7.5 g per bag) which are then used in conventional manner.

### Honey tea drink

Instant tea (Ristora) is mixed 1:0.5 with honey powder produced according to Example 3B to obtain a mix for preparing a honey-flavoured tea drink by adding an appropriate amount of water.

### Honey granules with motherwort

In Example 3 crude honey was premixed with 70% ethanol tincture of Leonurus cardiac (UfaVita, Ufa, RF). Humidity of crude honey was 17%, the motherwort tincture was taken in the amount 70 g / 1 kg of honey. The obtained granules are used as a mild sedative agent (3/4 tablespoons 4-5 times a day).

### Honey beer

### Ingredients:

1 lemon
2 Ib honey of granules prepared as in Example 3.
½ ounce of hops
1 teaspoon of granulated yeast (beer yeast or bread yeast)
1 gallon water

Peel the lemon rind. Squeeze the lemon and strain the juice to remove pips. Dissolve honey granules in 2 pints of the water.

Put the rest of the water into a large pan with the hops and lemon rind.

Bring to the boil and boil gently for 30 minutes.

Strain the hop water into the honey solution and leave to cool.

Discard the hops and lemon rind.

Add the activated yeast and lemon juice into the cooled mixture, cover over and leave for 3-4 days in a warm dark place.

When fermentation has ceased, pour into sterilized bottles, leaving an airspace at the top. Seal the bottles and leave in a warm room to ferment in the bottles for a few days.

After at least 2 weeks in a cool, dark place a honey flavoured low alcoholic drink is ready.

### Hair Mask

### Ingredients

1/4 glass honey granules prepared as in Example
1/2 cup burdock oil
2 Tbsp. ground onion husks

Mix honey and burdock oil thoroughly. Add onion husks. Mix again. The mask is applied a small amount at a time through hair until coated. After the application is completed, hair is covered with a shower cap (towel) and left for 15-30 minutes. After that the shower cap is removed followed by shampoo wash and rinse. The mask is preferably applied at least once a week to provide hair shine and strength.

### Honey Body Scrub

### Ingredients

1/4 glass freshly ground coffee of coffee from a coffee-machine
1/4 glass cream
2 Tbsp. wheat germ
2 Tbsp. honey granules prepared as in Example
1 egg white

In a mixer, combine cream, honey granules, and egg white, mix thoroughly. Carefully add coffee and wheat germ to obtain smooth and creamy scrub. Allow to stand. Apply all over the body in shower or bath using a washcloth or body sponge to aid in exfoliation. Rinse thoroughly. The scrub can be stored for 5 days in a fridge.

Experiments have been carried out to compare the free flowing product of the invention with the honey product produced by Stakich, USA. The comparison was based on basic parameters as set forth by the national standard for natural honey (GOST 19792-2001, Russian Federation) as currently in effect.

**Table 11**

| | | | | |
|---|---|---|---|---|
| Factor | Standard value, GOST 19792-2001* | Natural honey sample | Honey Granules according to the present invention | Honey product produced by Stakich, USA |
| Aroma | Pleasant, without extraneous smell | Normal | Pleasant, typical honey without extraneous smell | Weak, indefinite |
| Taste | Pleasant, without extraneous touch | Normal | Sweet, honey, pleasant, without extraneous touch | Sweet |
| Water content, weight % | <21,0 | 16,0 | 6,4 | 5,8 |
| Diastase index, Gothe unit | >7,0 | 28,7 | 11,7 | 1,4 |
| General acidity, cm3 NaOH | <4,0 | 2,0 | 1,0 | 1,5 |
| Sucrose, weight % | <6,0 | 0,3 | 0,2 | - |
| Reducing sugars, weight % | >82,0 | 98,5 | 95,2 | Less than 58,5 |
| HMF test | Negative | Negative | Negative | Positive |
| Signs of fermentation | Denied | Absent | Absent | Absent |
| Mechanical admixture | Denied | Absent | Absent | Absent |

| | | | | |
|---|---|---|---|---|
| * Analysis was performed by the St Petersburg Veterinary Direction, Russian Federation | | | | |

The presented data demonstrate that the product of the present invention complies with the state standard requirements for liquid natural honey, while the powdered product obtained by the method including the step of drying (Stakich) does not meet the criteria at least in part of diastase number and the content of HMF, which is considered as a potentially cancerogenic substance. One skilled in the art will understand that the present invention provides the natural honey product which is both in a free-flowing form suitable for easy transportation, processing and storage whilst retaining essentially all the bioactive compounds of honey in amounts approximating to those of crude honey, thus avoiding the drawbacks of processes involving the step of drying which results in deactivation or degradation of many useful substances.

Thus, it has been shown that the free-flowing product of the invention retains the native properties of natural honey. The product also possesses other advantageous properties. In particular, low water absorbability of the free-flowing product (which is the result of retaining inherent humidity and low absorbability of the additive used) it less demanding for storage conditions than the product obtained by drying. Moreover, the product of the present invention does not cake and maintains its flowability over time. The dietary properties of crude starting natural honey are not deteriorated in the process of the invention. The product of the invention completely dissolves without a residue in sufficient amount of water, while dissolving a product produced by Stakich, USA, and a product prepared according to the teaching of RU2309609 comprising additives such as a starch gives turbid solutions with sediment. The product of invention can be advantageously used in food industry, for preparing drinks and etc.

It will be appreciated that while using glucose as a main additive provides the technical effect of the present invention, auxiliary additives can be used to give additional useful properties to the product produced. Suitable additional additives include flower pollen, propolis, royal jelly, bee-bread, vitamins, bioactive substances, inorganic substances, different sugars, herb, flavoring agents and etc.

The free-flowing product according to the invention can be used as a separate product or as an additive to various food substances including, for example, dry instant dishes and ready for use including but not limited to muesli, porridges, cold and hot cereals, priming powders, confectionery, bakery products, milk and cultured milk foods (such as curds, yoghurt etc), drinks and dry compositions for the drink preparation (e.g., tee, herbs), different kinds of sugars (beet or cane sugar). The product can be used as a component for cosmetic, medical and hygienic goods. The free-flowing product of the present invention can be used in production of drinks and food concentrates for preparing them, for example, beer, mead, kvass, sbiten, saloop and other honey comprising drinks.

## Claims

1. A free flowing granulated particulate crystallized honey product comprising natural honey crystallized with glucose, wherein the product is **characterized by**:
(a) X-ray powder diffraction pattern having at least three peaks in degrees 2θ that are identified as characteristic peaks of crystalline glucose monohydrate, selected from 2θ= 28.3; 31.1; 37.1, 40.3, 41.4 ±0.3 degree; and
(b) moisture content of approximately 2% to 8%, preferably approximately 3% to 6%.

2. The free flowing granulated particulate crystallized honey product of claim 1, wherein the glucose content in the honey product is from 50 to 85% by total weight of the honey product.

3. The free flowing granulated particulate crystallized honey product of claim 1 or 2, wherein the product is **characterized by** the degree of crystallinity not less than 30%, preferably not less than 40%, more preferably not less than 50%, more preferably not less than 60%, more preferably not less than 70%, more preferably not less than 80%, and most preferably not less than 90%.

4. The free flowing granulated particulate crystallized honey product of any one of claims 1 to 3, wherein the product is **characterized by** diastase activity index not less than 90%, preferably not less than 95%, more preferably not less than 98% of the diastase activity index of the crude honey used, as calculated based on the weight of honey in the product.

5. The free flowing granulated particulate crystallized honey product of any one of claims 1 to 4, wherein the honey granules have irregular shape and average size selected from the intervals: 1 mm to 5 mm, 1 mm to 10 mm, 2 mm to 5 mm, 5 mm to 20 mm, 5 mm to 30 mm.

6. A healthy particulate food product, comprising
at least one nutrient component selected from corn flakes, muesli, cereal, dry breakfasts, nuts, milk and cultured milk ingredients, dry juice, tea, herbs, different kinds of sugars (beet or cane sugar) or a mixture thereof, and
a free flowing granulated particulate crystallized honey product of any one of claims 1 to 5.

7. A method for producing a free flowing granulated particulate crystallized honey product comprising natural honey, the method comprising the steps of:
mixing a crude honey with glucose as a crystallization agent at a temperature not higher than 50°C providing the biological activity of honey is preserved, wherein the mixing is performed until granulated honey particles are formed; and
holding the formed granulated particles until hardening to obtain a particulate crystallized honey product having the moisture level of about 2 to 8% mass.

8. The method of claim 7, wherein the honey granules are formed having the average size selected from the intervals: from 1 to 5 mm, from 1 mm to 10 mm, from 2 mm to 5 mm, from 5 mm to 20 mm, from 5 mm to 30 mm.

9. The method of any one of claims 7 to 8, wherein the mixing is performed during the period of less than 15 min.

10. The method of any one of claims 7 to 9, wherein the step of mixing comprises additionally admixing one or more of the following ingredients: flower pollen, propolis, royal jelly, bee-bread, vitamins, bioactive substances, mineral substances, dry milk, sugars, herb extracts, flavoring agents or a mixture thereof.

11. Use of a free flowing granulated particulate crystallized honey product of any one of claims 1 to 5 for preparing food products, beverages, cosmetic formulations, hygienic and medical applications.

12. The use of claim 11, wherein said food products are dietetic and non-dietetic foodstuff selected from bread, bakery, pastry, confectionery, candies.

13. The use of claim 11, wherein said beverages further comprise a second particulate component selected from tea, coffee, cacao, dried herbs and herbal mixtures, dried natural juice compositions, dry mixtures for preparing drinks.

14. The use of claim 11, wherein said beverages are honey beverages on aqueous base selected from beer, kvass, mead, saloop, sbiten, other honey drinks, hot and cold tea, coffee, cacao, chocolate, juice, and similar.

15. The use of claim 11, wherein said beverages are milk based products selected from milk drinks, milk shakes, sour milk products such as curds, curd masses, curdled milk, kefir, youghurt.

## Patentansprüche

1. Freifliessendes granuliertes partikuliertes kristallisiertes Honigprodukt, das mit Glukose kristallisierten natürlichen Honig enthält, worin das Produkt **gekennzeichnet ist durch**:
(a) ein Röntgenpulverdiffraktometriemuster mit mindestens drei Spitzen bei Grad 2Θ, welche als charakteristische Spitzen von kristallinem Glukosemonohydrat identifiziert sind, ausgewählt aus Grad 2Θ = 28.3; 31.1 ; 37.1, 40.3, 41.4 ±0.3; und
(b) ein Feuchtegehalt von ca. 2% bis 8%, vorzugsweise von ca. 3% bis 6%.

2. Das freifliessende granulierte partikulierte kristallisierte Honigprodukt von Anspruch 1, worin der Glukosegehalt im Honigprodukt bei 50% bis 85% des Gesamtgewichts des Honigprodukts liegt.

3. Das freifliessende granulierte partikulierte kristallisierte Honigprodukt von Anspruch 1 oder 2, worin das Produkt durch einen Kristallinitätsgrad von nicht weniger als 30%, vorzugsweise nicht weniger als 40%, auf noch bevorzugtere Weise nicht weniger als 50%, auf noch bevorzugtere Weise nicht weniger als 60%, auf noch mehr bevorzugtere Weise nicht weniger als 70%, auf noch mehr bevorzugtere Weise nicht weniger als 80% und am meisten bevorzugt nicht weniger als 90% gekennzeichnet ist.

4. Das freifliessende granulierte partikulierte kristallisierte Honigprodukt von einem beliebigen Anspruch 1 bis 3, worin das Produkt **gekennzeichnet ist durch** einen Diastaseaktivitätsindex von nicht weniger als 90%, vorzugsweise von nicht weniger als 95%, auf noch bevorzugtere Weise von nicht weniger als 98% des Diastaseaktivitätsindex des verwendeten Rohhonigs, wie auf Basis des Gewichts des Honigs im Produkt berechnet.

5. Das freifliessende granulierte partikulierte kristallisierte Honigprodukt von einem beliebigen Anspruch 1 bis 4, worin die Honiggranulate eine unregelmässige Form und eine Durchschnittsgrösse ausgewählt aus den Intervallen: 1 mm bis 5 mm, 1 mm bis 10 mm, 2 mm bis 5 mm, 5 mm bis 20 mm, 5 mm bis 30 mm aufweisen.

6. Gesundes partikuliertes Lebensmittelprodukt mit:
mindestens einer Nährstoffkomponente, ausgewählt aus: Maisflocken,
Müesli, Cerealien/Getreiden, trockener Frühstücknahrung, Nüssen, Milcherzeugnissen und fermentierten Milcherzeugnissen, Trockensäften, Tee, Kräutern, verschiedenen Arten von Zucker (Rübenzucker oder Rohrzucker) oder einer Mischung davon, und
dem freifliessenden granulierten partikulierten kristallisierten Honigprodukt von einem beliebigen Anspruch 1 bis 5.

7. Verfahren zur Herstellung eines freifliessenden granulierten partikulierten kristallisierten Honigprodukts mit natürlichem Honig, wobei das Verfahren die folgenden Schritte umfasst:
Mischen des Rohhonigs mit Glukose als Kristallisationsmittel bei einer Temperatur nicht höher als 50°C, welche den Erhalt der biologischen Aktivität des Honigs gewährleistet, worin das Mischen durchgeführt wird, bis granulierte Honigpartikel gebildet werden; und
Aufbewahren der gebildeten granulierten Partikel bis zur Härtung, um ein partikuliertes kristallisiertes Honigprodukt mit einem Feuchtigkeitsgrad von ca. 2 Gewichts-% bis 8 Gewichts-% zu erhalten.

8. Das Verfahren von Anspruch 7, worin die Honiggranulate mit einer Durchschnittsgrösse ausgewählt aus den Intervallen: 1 mm bis 5 mm, 1 mm bis 10 mm, 2 mm bis 5 mm, 5 mm bis 20 mm, 5 mm bis 30 mm gebildet werden.

9. Das Verfahren von einem beliebigen Anspruch 7 bis 8, worin das Mischen während einer Periode von weniger als 15 Minuten durchgeführt wird.

10. Das Verfahren von einem beliebigen Anspruch 7 bis 9, worin der Mischschritt zudem die Beimischung von einer oder mehreren der folgenden Zutaten umfasst: Blütenpollen, Propolis, Gelee Royale, Bienenbrot, Vitaminen, bioaktiven Substanzen, Mineralstoffen, Trockenmilch, Zuckern, Kräuterextrakten, Aromastoffen oder einer Mischung davon.

11. Verwendung eines freifliessenden granulierten partikulierten kristallisierten Honigprodukts gemäss einem beliebigen Anspruch 1 bis 5 zur Herstellung von Lebensmitteln, Getränken, kosmetischen Formulierungen, Hygiene- und Medizinanwendungen.

12. Die Verwendung gemäss Anspruch 11, worin die besagten Produkte diätetische und nichtdiätetische Nahrungsmittel sind, ausgewählt aus: Brot, Bäckereierzeugnissen, Gebäck, Konditoreiartikeln, Bonbons.

13. Die Verwendung gemäss Anspruch 11, worin die besagten Getränke eine zweite partikulierte Komponente umfassen, ausgewählt aus: Tee, Kaffee, Kakao, Trockenkräutern und Kräutermischungen, getrockneten Zusammensetzungen von natürlichem Saft, Trockenmischungen zur Herstellung von Getränken.

14. Die Verwendung gemäss Anspruch 11, worin die besagten Getränke Honiggetränke auf Wasserbasis sind, ausgewählt aus: Bier, Kwass, Met, Salep, Sbiten, anderen Getränken auf Honigbasis, kaltem und heissem Tee, Kaffee, Kakao, Schokolade, Säften und ähnlichen.

15. Die Verwendung gemäss Anspruch 11, worin die besagten Getränke Produkte auf Milchbasis sind, ausgewählt aus: Milchgetränken, Milchshakes, Sauermilchprodukten wie Quark, Bruchmassen, Sauermilch, Kefir, Joghurt.

## Revendications

1. Produit de miel cristallisé particulaire granulé fluide comprenant du miel naturel cristallisé avec du glucose, dans lequel le produit est **caractérisé par**:
(a) un diagramme de diffraction des rayons X sur poudre possédant au moins trois pics à degrés 2Θ qui sont identifiés comme des pics caractéristiques de glucose monohydraté cristallin, sélectionnés parmi les degrés 2Θ = 28.3; 31.1 ; 37.1, 40.3, 41.4 ±0.3; et
(b) un taux d'humidité d'approximativement 2% à 8%, de préférence d'approximativement 3% à 6%.

2. Le produit de miel cristallisé particulaire granulé fluide de la revendication 1, dans lequel la teneur en glucose dans le produit de miel est de 50% à 85% par poids total du produit de miel.

3. Le produit de miel cristallisé particulaire granulé fluide de la revendication 1 ou 2, dans lequel le produit est **caractérisé par** un degré de cristallinité de pas moins de 30%, de préférence d'au moins 40%, de manière plus préférentielle d'au moins 50%, de manière plus préférentielle d'au moins 60%, de manière encore plus préférentielle d'au moins 70%, de manière encore plus préférentielle d'au moins 80% et le plus préférablement de pas moins de 90%.

4. Le produit de miel cristallisé particulaire granulé fluide de l'une quelconque des revendications 1 à 3, dans lequel le produit est **caractérisé par** un indice d'activité diastasique de pas moins de 90%, de préférence d'au moins 95%, de manière plus préférentielle d'au moins 98% de l'indice d'activité diastasique du miel brut utilisé, tel que calculé sur la base du poids du miel dans le produit.

5. Le produit de miel cristallisé particulaire granulé fluide de l'une quelconque des revendications 1 à 4, dans lequel les granules de miel ont une forme irrégulière et une taille moyenne sélectionnée parmi les intervalles: 1 mm à 5 mm, 1 mm à 10 mm, 2 mm à 5 mm, 5 mm à 20 mm, 5 mm à 30 mm.

6. Produit alimentaire particulaire sain, comprenant:
au moins un composant nutritionnel sélectionné parmi les flocons de maïs, le muesli, les céréales, les aliments secs pour petit-déjeuner, les fruits à coque, les substances laitières et les substances laitières de culture, les jus séchés, le thé, les herbes, différents types de sucre (sucre de betterave ou sucre de canne) ou un mélange de ceux-ci, et
le produit de miel cristallisé particulaire granulé fluide de l'une quelconque des revendications 1 à 5.

7. Procédé pour la production d'un produit de miel cristallisé particulaire granulé fluide comprenant du miel naturel, le procédé comportant les étapes de:
mélanger le miel brut avec du glucose comme agent de cristallisation à une température n'excédant pas 50°C pour assurer que l'activité biologique du miel soit préservée, dans lequel l'opération de mélanger est effectuée jusqu'à la formation des particules granulées de miel; et
maintenir les particules granulées formées jusqu'à durcissement pour obtenir un produit de miel cristallisé particulaire présentant un taux d'humidité d'environ 2% à 8% en poids.

8. Le procédé de la revendication 7, dans lequel les granules de miel sont formés possédant une taille moyenne sélectionnée parmi les intervalles: 1 mm à 5 mm, 1 mm à 10 mm, 2 mm à 5 mm, 5 mm à 20 mm, 5 mm à 30 mm.

9. Le procédé de l'une quelconque des revendications 7 à 8, dans lequel l'opération de mélanger est effectuée pendant une période de moins de 15 minutes.

10. Le procédé de l'une quelconque des revendications 7 à 9, dans lequel l'étape de mélanger comprend en outre l'adjonction de l'un ou plus des ingrédients suivants: pollen de fleurs, propolis, gelée royale, pain d'abeille, vitamines, substances bioactives, substances minérales, poudre de lait, sucres, extraits végétaux, agents aromatiques ou un mélange de ceux-ci.

11. Utilisation d'un produit de miel cristallisé particulaire granulé fluide selon l'une quelconque des revendications 1 à 5 pour la préparation de produits alimentaires, boissons, formulations cosmétiques, applications hygiéniques et médicales.

12. L'utilisation selon la revendication 11, dans laquelle lesdits produits sont des produits alimentaires diététiques et non diététiques sélectionnés parmi le pain, les articles de boulangerie, les articles de pâtisserie, les articles de confiserie, les bonbons.

13. L'utilisation selon la revendication 11, dans laquelle lesdites boissons comprennent un deuxième composant particulaire sélectionné parmi le thé, le café, le cacao, les herbes séchées et les mélanges d'herbes, les compositions de jus naturels séchés, les préparations sèches pour la préparation de boissons.

14. L'utilisation selon la revendication 11, dans laquelle lesdites boissons sont des boissons au miel à base aqueuse sélectionnées parmi la bière, le kvas, l'hydromel, le salep, le sbiten, d'autres boissons à base de miel, le thé chaud et froid, le café, le cacao, le chocolat, le jus et autres.

15. L'utilisation selon la revendication 11, dans laquelle lesdites boissons sont des produits à base de lait sélectionnés parmi les boissons lactées, les laits frappés, les produits au lait fermenté tels que le caillé, la caillebotte, le lait caillé, le kéfir, le yaourt.
